# EUROPEAN PATENT APPLICATION

(11) **EP 4 542 407 A1**
(43) Date of publication of application: **23.04.2025**
(21) Application number: 23876467.4
(22) Date of filing: 15.09.2023
(51) Int. Cl.: G06F 16/11

(54) **SNAPSHOTTING METHOD, ELECTRONIC DEVICE, COMPUTER PROGRAM PRODUCT AND READABLE STORAGE MEDIUM**

(30) Priority: 10.10.2022 CN 202211236869
(71) Applicant: Huawei Technologies Co., Ltd., Shenzhen, Guangdong 518129 (CN)
(72) Inventor: CHEN, Jinglong, Shenzhen, Guangdong 518129 (CN); ZHOU, Zhichao, Shenzhen, Guangdong 518129 (CN); MAO, Jingjing, Shenzhen, Guangdong 518129 (CN); WEI, Longping, Shenzhen, Guangdong 518129 (CN)
(74) Representative: MERH-IP Matias Erny Reichl Hoffmann Patentanwälte PartG mbB
(86) International application number: PCT/CN2023/119212
(87) International publication number: WO 2024/078262

(57) **Abstract**

This application provides a snapshot method, an electronic device, a computer program product, and a computer-readable storage medium, and relates to the terminal field. The snapshot method includes: in response to a snapshot request for a first file, generating an image file corresponding to the first file; writing metadata of the image file into a first preset storage area; and writing the metadata of the image file stored in the first preset storage area into a package file, and storing data of the image file in the package file based on a copy-on-write mechanism, where the metadata of the image file and metadata of the package file point to different physical pages, and the data of the image file and data of the package file point to a same physical page. In this application, file metadata with a small amount is written into a package file, and file data with a large amount is stored in the package file in a copy-on-write manner, without involving reading file data from a storage device or writing file data into a storage device, thereby shortening a file snapshot generation time, and less affecting system performance.

## Description

This application claims priority to Chinese Patent Application No. 202211236869.7, filed with the China National Intellectual Property Administration on October 10, 2022 and entitled "SNAPSHOT METHOD, ELECTRONIC DEVICE, COMPUTER PROGRAM PRODUCT, AND READABLE STORAGE MEDIUM", which is incorporated herein by reference in its entirety.

### TECHNICAL FIELD

This application relates to the terminal field, and in particular, to a snapshot method, an electronic device, a computer program product, and a computer-readable storage medium.

### BACKGROUND

An existing operating system generally supports backing up user data by using a backup system. In a data backup process, a time-consuming process is generating an application snapshot, where the application snapshot may be a snapshot file that stores a state of application data at a specific moment. To ensure consistency of states of snapshot files, during application snapshot generation, a user is usually not advised to use an application or is prohibited from using an application, so that a snapshot file of the application does not include both file data in a new state and that in an old state. To improve user experience, it is necessary to shorten time consumed by an application snapshot as much as possible.

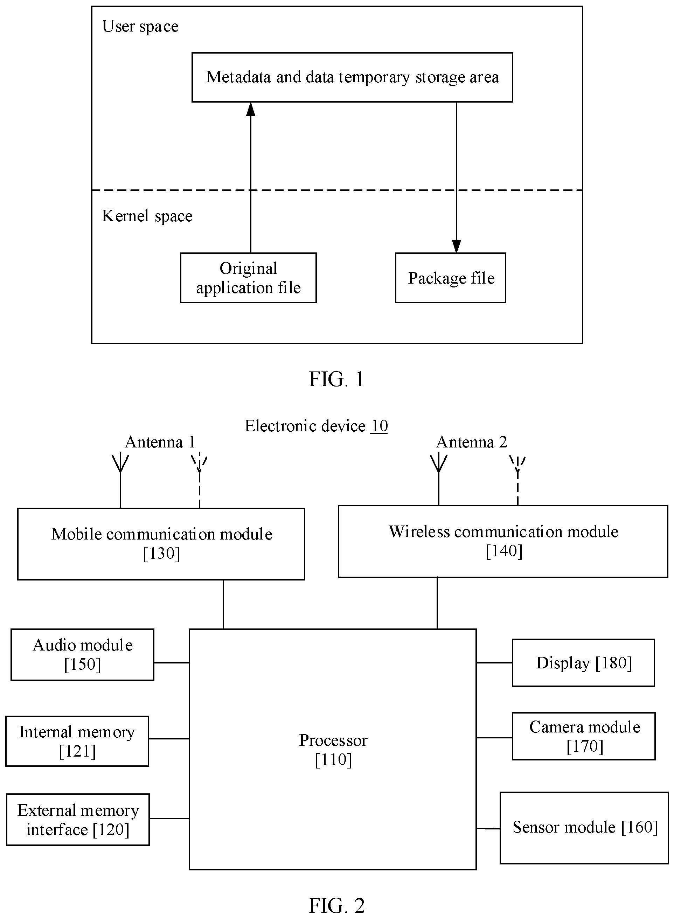

An existing application snapshot manner is shown in FIG. 1. By traversing original application files of an application, metadata and data of each original application file are read and written from kernel space into a temporary storage area located in user space, and then the metadata and data stored in the temporary storage area are written into a package file. In other words, a snapshot performed on the metadata/data of the original application file involves two data copies between the kernel space and the user space. Consequently, an application snapshot takes an excessively long time, and the data copy occupies many system resources, greatly affecting system performance and affecting user experience.

### SUMMARY

In view of this, it is necessary to provide a snapshot method, to resolve a problem in the conventional technology that an application snapshot generation time is excessively long, and system performance is greatly affected.

A first aspect of embodiments of this application discloses a snapshot method, including: in response to a snapshot request for a first file, generating an image file corresponding to the first file; writing metadata of the image file into a first preset storage area; and writing the metadata of the image file stored in the first preset storage area into a package file, and storing data of the image file in the package file based on a copy-on-write mechanism, where the metadata of the image file and metadata of the package file point to different physical pages, and the data of the image file and data of the package file point to a same physical page.

According to the foregoing technical solution, when a snapshot is performed on a file, an image file corresponding to the file is generated, so that a file state is quickly frozen. Subsequently, a package file is generated based on the image file, so that a user can normally operate the file after the image file is generated. Unlike an existing package file generation solution in which the user is prohibited from operating the file before the package file is generated, this technical solution can improve user experience. A manner of writing file metadata with a small amount into the package file may be: reading the metadata of the image file from kernel space and storing the metadata of the image file in a first preset storage area in user space, where the first preset storage area is, for example, a metadata temporary storage area in the user space; and then writing the metadata of the image file stored in the first preset storage area into the package file. In this file metadata writing manner, the metadata of the image file and metadata of the package file point to different physical pages. A manner of writing file data with a large amount into the package file may be: performing copy-on-write on the data of the image file in the kernel space, and storing the data of the image file in the package file. In this file data writing manner, the data of the image file and the data of the package file point to a same physical page. Because the data of the image file is stored in the package file in the copy-on-write manner, copy and write operations on the data of the image file are not involved. In this process, the data of the image file does not need to be read from a storage device or the data of the image file does not need to be written into a storage device. Therefore, a file snapshot generation time is short, system performance is less affected, and development and maintenance costs are low.

In some embodiments, the metadata of the image file and metadata of the first file point to different physical pages, and the data of the image file and data of the first file point to a same physical page.

According to the foregoing technical solution, the metadata of the image file and the metadata of the first file also point to different physical pages, and the data of the image file, the data of the first file, and the data of the defense file point to a same physical page. The data of the first file is stored in the image file in the copy-on-write manner, and the data of the image file is stored in the package file in the copy-on-write manner. Copy and write operations on the file data are not involved. In this process, the file data does not need to be read from a storage device or the file data does not need to be written into a storage device. Therefore, a file snapshot generation time is shortened, and system performance is less affected.

In some embodiments, the generating an image file corresponding to the first file includes: writing the metadata of the first file into the image file, and storing the data of the first file in the image file based on the copy-on-write mechanism.

According to the foregoing technical solution, the metadata of the first file with a small amount is written into the image file, and the data of the first file with a large amount is stored in the image file based on the copy-on-write mechanism. Because the data of the first file is stored in the image file in the copy-on-write manner, copy and write operations on the data of the first file are not involved. In this process, the data of the first file does not need to be read from a storage device or the data of the first file does not need to be written into a storage device. Therefore, a file snapshot generation time is short, system performance is less affected, and development and maintenance costs are low.

In some embodiments, the writing the metadata of the first file into the image file, and storing the data of the first file into the image file based on the copy-on-write mechanism includes: creating a first blank file, and writing the metadata of the first file into the first blank file; and performing copy-on-write on the data of the first file, and storing the data of the first file in the first blank file into which the metadata of the first file is written, to obtain the image file corresponding to the first file.

According to the foregoing technical solution, a blank file is created, the metadata of the first file is written into the blank file, and copy-on-write is performed on the data of the first file, to store the data of the first file in the blank file into which the metadata of the first file is written. The blank file in which the metadata of the first file and the metadata of the first file are stored is used as the image file corresponding to the first file. The image file and the first file have same metadata and data. An index structure of the image file and an index structure of the first file point to a same physical block, and the image file and the first file share data stored in the physical block.

In some embodiments, the writing the metadata of the first file into the image file includes: writing the metadata of the first file into a second preset storage area; and writing the metadata of the first file stored in the second preset storage area into the image file.

According to the foregoing technical solution, a manner of writing the metadata of the first file with a small amount into the image file may be: reading the metadata of the first file from the kernel space and storing the metadata of the first file in the second preset storage area in the user space, where the second preset storage area is, for example, the metadata temporary storage area in the user space, and then writing the metadata of the first file stored in the second preset storage area into the image file, where the metadata of the first file and the metadata of the image file point to different physical pages.

In some embodiments, the second preset storage area is located in user space, and the storing the data of the first file into the image file based on the copy-on-write mechanism includes: performing copy-on-write on the data of the first file in kernel space, and storing the data of the first file into the image file.

According to the foregoing technical solution, a manner of writing the metadata of the first file with a small amount into the image file may be: reading the metadata of the first file from the kernel space, storing the metadata of the first file in the second preset storage area in the user space, and then writing the metadata of the first file stored in the second preset storage area into the image file. A manner of writing the data of the first file with a large amount into the image file may be: performing copy-on-write on the data of the first file in the kernel space, and storing the data of the first file in the image file. Because the data of the first file is stored in the image file in the copy-on-write manner, copy and write operations on the data of the first file are not involved. In this process, the data of the first file does not need to be read from a storage device or the data of the first file does not need to be written into a storage device. Therefore, a file snapshot generation time is short, system performance is less affected, and development and maintenance costs are low.

In some embodiments, the first file includes a plurality of sub-files, the image file corresponding to the first file includes a plurality of image sub-files, and the writing metadata of the image file into a first preset storage area includes: reorganizing a physical structure of metadata of the plurality of image sub-files based on a preset packaging standard format; and writing the reorganized metadata of the plurality of image sub-files into the first preset storage area.

According to the foregoing technical solution, a physical structure of metadata and data of the plurality of image sub-files may be set by a file system. The metadata and data of the plurality of image sub-files are generally not sorted based on an association relationship between the metadata and data of the plurality of image sub-files. A physical structure of metadata of each image sub-file is reorganized based on the preset packaging standard format for the metadata of the plurality of image sub-files. For example, the preset packaging standard format is a POSIX format. The reorganized metadata is written from the kernel space into the first preset storage area located in the user space. In this way, subsequently, the metadata and data in the package file may be sorted based on the association relationship between the metadata and data. For example, the package file has the following physical structure: [file 1 metadata][file 1 data][file 2 metadata][file 2 data]...[file N metadata] [file N data].

In some embodiments, the generating an image file corresponding to the first file includes: invoking a preset kernel interface to copy the metadata of the first file and perform copy-on-write on the data of the first file, to obtain the image file corresponding to the first file.

According to the foregoing technical solution, the kernel interface may be customized to implement functions of copying the metadata of the first file and performing copy-on-write on the data of the first file, to obtain the image file corresponding to the first file.

In some embodiments, the invoking a preset kernel interface to copy the metadata of the first file and perform copy-on-write on the data of the first file includes: invoking the preset kernel interface to copy the metadata of the first file and perform copy-on-write on the data of the first file in kernel space.

According to the foregoing technical solution, the kernel interface may be customized to implement functions of copying the metadata of the first file and performing copy-on-write on the data of the first file in the kernel space. By invoking the kernel interface, copying the metadata of the first file and performing copy-on-write on the data of the first file in the kernel space may be implemented at a time. Compared with twice metadata copy between the kernel space and the user space that is involved when the metadata temporary storage area is set in the user space to stage the file metadata, this technical solution of copying the file metadata in the kernel space by invoking the kernel interface consumes a shorter time.

In some embodiments, the first file includes a plurality of sub-files, and the invoking a preset kernel interface to copy the metadata of the first file and perform copy-on-write on the data of the first file includes: searching user space for a to-be-imaged sub-file; and invoking the preset kernel interface to copy metadata of the to-be-imaged sub-file and perform copy-on-write on data of the to-be-imaged sub-file in kernel space.

According to the foregoing technical solution, the to-be-imaged sub-file can be searched in the user space, and the kernel interface is invoked in the kernel space to copy the metadata of the to-be-imaged sub-file and perform copy-on-write on the data of the to-be-imaged sub-file, to obtain the image file corresponding to the first file. Compared with implementing functions of searching for the to-be-imaged sub-file and generating an image file of each sub-file in the kernel space, this technical solution reduces development difficulty and maintenance costs.

In some embodiments, the first preset storage area is located in user space, and the storing data of the image file into the package file based on a copy-on-write mechanism includes: performing copy-on-write on the data of the image file in kernel space, and storing the data of the image file in the package file.

According to the foregoing technical solution, the metadata of the image file with a small amount is written into the package file, and the data of the image file with a large amount is stored in the package file based on the copy-on-write mechanism. Because the data of the image file is stored in the package file in the copy-on-write manner, copy and write operations on the data of the image file are not involved. In this process, the data of the image file does not need to be read from a storage device or the data of the image file does not need to be written into a storage device. Therefore, a file snapshot generation time is short, system performance is less affected, and development and maintenance costs are low.

In some embodiments, the writing the metadata of the image file stored in the first preset storage area into a package file, and storing data of the image file into the package file based on a copy-on-write mechanism includes: creating a second blank file, and writing the metadata of the image file stored in the first preset storage area into the second blank file; and performing copy-on-write on the data of the image file, and storing the data of the image file in the second blank file into which the metadata of the image file is written, to obtain the package file.

According to the foregoing technical solution, a blank file is created, the metadata of the image file is written into the blank file, and copy-on-write is performed on the data of the image file, to store the data of the image file in the blank file into which the metadata of the image file is written. The blank file in which the metadata of the image file and the metadata of the image file are stored is used as the package file corresponding to the first file. The image file and the package file have same metadata and data. An index structure of the image file and an index structure of the package file point to a same physical block, and the image file and the package file share data stored in the physical block.

In some embodiments, the first file is all files of a first application, and after the generating an image file corresponding to the first file, the method further includes: outputting prompt information associated with the first application, where the prompt information is used to prompt that an operation can be performed on the first application.

According to the foregoing technical solution, after the image file corresponding to the first application is obtained, a package file corresponding to the first application is generated based on the image file of the first application, so that the user can normally use the first application after the image file corresponding to the first file is generated. For example, prompt information may be output to prompt the user that the first application can be normally used. A problem existing in the existing package file generation solution is not caused, where the problem is that before the package file is generated, if the user uses the first application, the package file includes files in both new and old states. In other words, unlike the existing package file generation solution in which the user is prohibited from using the first application before the package file is generated, this technical solution can improve user experience.

In some embodiments, the first file is all files of a first application, and before the generating an image file corresponding to the first file, the method further includes: creating an image root directory corresponding to a root directory of the first application, where the image root directory is used to store the image file.

According to the foregoing technical solution, in a process of performing a snapshot on the first application, information about the root directory of the first application may be obtained, and the image root directory corresponding to the root directory of the first application is created. The image root directory may be used to store the image file of the first application, so that the package file may be subsequently generated based on directories and files in the image root directory.

In some embodiments, the image root directory is the same as the root directory of the first application, or the image root directory is a subset of the root directory of the first application.

According to the foregoing technical solution, the root directory of the first application may be the same as the image root directory of the first application. In other words, directories and files in the root directory of the first application is the same as directories and files in the image root directory of the first application. Alternatively, the image root directory of the first application may be a subset of the root directory of the first application. In other words, the image root directory of the first application has some directories and files in the root directory of the first application.

According to a second aspect, an embodiment of this application provides a computer-readable storage medium, including computer instructions. When the computer instructions are run on an electronic device, the electronic device is enabled to perform the snapshot method according to the first aspect.

According to a third aspect, an embodiment of this application provides an electronic device. The electronic device includes a processor and a memory. The memory is configured to store instructions, and the processor is configured to invoke the instructions in the memory, so that the electronic device is enabled to perform the snapshot method according to the first aspect.

According to a fourth aspect, an embodiment of this application provides a computer program product. When the computer program product runs on an electronic device (like a computer), the electronic device is enabled to perform the snapshot method according to the first aspect.

According to a fifth aspect, an apparatus is provided, and the apparatus has a function of implementing behavior of the electronic device in the method provided in the first aspect. The function may be implemented by hardware, or may be implemented by hardware executing corresponding software. The hardware or software includes one or more modules corresponding to the foregoing functions.

It may be understood that the computer-readable storage medium according to the second aspect, the electronic device according to the third aspect, the computer program product according to the fourth aspect, and the apparatus according to the fifth aspect all correspond to the method according to the first aspect. Therefore, for beneficial effects that can be achieved, refer to beneficial effects in the corresponding method provided above. Details are not described herein again.

### BRIEF DESCRIPTION OF DRAWINGS

FIG. 1 is a diagram of an existing architecture in which an electronic device implements an application snapshot;
FIG. 2 is a diagram of a structure of an electronic device according to an embodiment of this application;
FIG. 3 is a diagram of a software structure of an electronic device according to an embodiment of this application;
FIG. 4 is a diagram of an application scenario of a snapshot method according to an embodiment of this application;
FIG. 5 is a diagram of an architecture in which an electronic device implements an application snapshot according to an embodiment of this application;
FIG. 6a is a diagram of a structure of a root directory of a first APP according to an embodiment of this application;
FIG. 6b is a diagram of a structure of an image root directory of a first APP according to an embodiment of this application;
FIG. 7 is a diagram of an architecture in which an electronic device implements an application snapshot according to another embodiment of this application;
FIG. 8 is a diagram of an original file, an image file, and a package file of a first APP sharing file data stored in a physical block according to an embodiment of this application;
FIG. 9 is a schematic flowchart of a snapshot method according to an embodiment of this application; and
FIG. 10 is a diagram of function modules of a snapshot apparatus according to an embodiment of this application.

### DESCRIPTION OF EMBODIMENTS

It should be noted that, in this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists, where A and B may be singular or plural. In the specification, claims, and accompanying drawings of this application, the terms "first", "second", "third", "fourth", and the like (if existing) are intended to distinguish between similar objects but do not necessarily indicate a specific order or sequence.

In embodiments of this application, the term "example" or "for example" is used to represent giving an example, an illustration, or a description. Any embodiment or design scheme described as "example" or "for example" in embodiments of this application should not be construed as being more preferred or having more advantages than another embodiment or design scheme. Exactly, use of the term such as "example" or "for example" is intended to present a related concept in a specific manner.

An operating system (Operating System, OS) is a computer program that manages computer hardware and software resources.

A kernel establishes a platform established for communication between computer software and hardware. The kernel provides system services, such as file management, virtual memory, and device input/output (Input/Output, I/O).

User space, also referred to as a user mode, is active space of upper-layer applications. Execution of applications depends on resources provided by the kernel, such as CPU resources, storage resources, and I/O resources.

Kernel space, also referred to as a kernel mode, is used to control hardware resources of a computer and provide an environment for running upper-layer applications.

A snapshot is an image of a data set at a specific moment, and is also referred to as an instant copy. The snapshot is a complete available copy of the data set.

Copy-on-write (copy on write, COW) is an optimization policy in the field of computer program designs. A core idea of copy-on-write is as follows: If a plurality of callers request a same resource at the same time, these callers jointly obtain a same pointer to the same resource. It is not until a caller attempts to modify content of the resource that a system actually makes a private copy for the caller, and an original resource seen by other callers remains unchanged. This process is visible to other callers. An advantage of this method is that if the caller does not modify the resource, no copy is created. Therefore, the plurality of callers can share the same resource only when the callers read the resource.

A file system is a method of storing and organizing computer data. By using the file system, it becomes easy to access and search for computer data. In the file system, abstract logical concepts of a file and a tree directory are used to replace concepts of data blocks used by physical devices such as a hard disk and an optical disc. When using the file system to store data, a user does not need to care about a specific actual address of a data block for storing data in a hard disk (or an optical disc), and the user only needs to remember a directory and a file name of a file. Before new data is written, the user does not need to care about a case that a block address in the hard disk is not used. A storage space management (allocation, release, and the like) function in the hard disk is automatically completed by the file system. The user only needs to remember a specific file into which the data is written.

In the conventional technology, performing a snapshot on a file includes performing a snapshot on metadata of the file and performing a snapshot on data of the file. The metadata of the file is data used to describe the file, and the metadata of the file may include information such as a file name and a latest modification time of the file. When the snapshot is performed on the metadata of the file, a physical structure of the metadata may be reorganized based on a preset packaging standard format (for example, a portable operating system interface (portable operating system interface of unix, POSIX) format), and the standardized metadata is written into a package file. When the snapshot is performed on the data of the file, the data of the file is written into the package file. The package file may refer to a general file in which a plurality of files or directories are stored. The general file is referred to as the package file. When the snapshot is performed on the metadata or the data of the file, reading the metadata or the data of the file from kernel space involves once copying from the kernel space to user space, and writing the metadata or the data of the file from the user space into the package file involves once copying from the user space to the kernel space. In other words, a snapshot performed on the metadata or the data of the file involves twice data copy between the kernel space and the user space. To copy data between the kernel space and the user space, a file on a disk needs to be first copied to a page cache (page cache), and then the file in the page cache is copied to a buffer (buffer) of a user. Data copy between the user space and the kernel space is the opposite. It takes a long time for two data copies between the kernel space and the user space. Consequently, a file snapshot generation time is excessively long, and the data copy occupies many system resources. As a result, system performance is greatly affected and user experience is affected. A solution for performing a snapshot on a file only in kernel space is developed, for example, data in a page cache of an original file is copied to a page cache of a new file, or data in a page cache of an original file is first copied to a temporarily created cache, and then stored in a page cache of a new file. The foregoing solution can avoid a problem that a snapshot of metadata or data of a file involves data copy between kernel space and user space. However, for a file snapshot solution that is implemented only in kernel space, kernel development requires high technical accumulation, and is difficult to develop and debug. In addition, kernel development cannot use a high-level programming language. If the C language or assembly language is used for kernel development, development and maintenance costs are high.

It is considered that an amount of metadata of a file is far less than an amount of data of the file in most cases. For example, an amount of metadata of a file may be several K bytes to a dozen K bytes, and an amount of data of the file may be hundreds of M bytes to several G bytes. Therefore, performance overheads generated when the data and metadata of the file are copied between the kernel space and the user space are mainly generated when the data of the file is copied between the kernel space and the user space. Performance overheads generated when the metadata of the file is copied between the kernel space and the user space are usually small.

Based on this, embodiments of this application provide a snapshot method. A manner of writing file metadata with a small amount into a package file is: reading the metadata of the file from kernel space, storing the metadata into a metadata temporary storage area in user space, and then writing the metadata of the file stored in the metadata temporary storage area into the package file. A manner of writing file data with a large amount into the package file is: performing copy-on-write on the data of the file in the kernel space, and storing a copy-on-write copy in the package file. Because the file data is stored in the package file in the copy-on-write manner, copy and write operations on the file data are not involved. In this process, the file data does not need to be read from a storage device or the file data does not need to be written into a storage device. Therefore, a file snapshot generation time is short, system performance is less affected, and development and maintenance costs are low.

The snapshot method provided in embodiments of this application may be applied to an electronic device. The electronic device in this application may include but is not limited to at least one of a mobile phone, a foldable electronic device, a tablet computer, a personal computer (personal computer, PC), a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a smart home device, an in-vehicle device, and a smart city device. A specific type of the electronic device is not specifically limited in embodiments of this application.

In some embodiments, the electronic device may further communicate with another electronic device or server through a communication network. The communication network may be a wired network, or may be a wireless network. For example, the communication network may be a local area network (local area network, LAN), or may be a wide area network (wide area network, WAN), for example, the internet. When the communication network is a local area network, the communication network may be, for example, a near-distance communication network like a wireless fidelity (wireless fidelity, Wi-Fi) hot spot network, a Wi-Fi P2P network, a Bluetooth network, a ZigBee network, or a near field communication (near field communication, NFC) network. When the communication network is a wide area network, the communication network may be, for example, a 3rd generation wireless telephone technology (3rd generation wireless telephone technology, 3G) network, a 4th generation mobile communication technology (4th generation mobile communication technology, 4G) network, a 5th generation mobile communication technology (5th generation mobile communication technology, 5G) network, a future evolved public land mobile network (public land mobile network, PLMN), or the internet.

In some embodiments, one or more APPs (Application) may be installed on the electronic device. The APP may be referred to as an application, and is a software program that can implement one or more specific functions, for example, an instant messaging application, a video application, an audio application, an image shooting application, and a cloud desktop application. The instant messaging application may include, for example, WeChat^{®} and QQ^{®}. The image shooting application may include, for example, a camera application (a system camera or a third-party camera application). The video application may include, for example, HUAWEI Video and iQIYI^{®}. The audio application may include, for example, Huawei Music and NetEase Cloud Music^{®}. An application mentioned in the following embodiments may be a system application installed when the electronic device is delivered from the factory, or may be a third-party application downloaded by a user from a network or obtained by the user from another electronic device during use of the electronic device.

The electronic device is equipped with an operating system including but not limited to iOS^{®}, Android^{®} (Android^{®}), Windows Mobile^{®}, HarmonyOS^{®}, or the like.

FIG. 2 is a diagram of a structure of an electronic device 10.

The electronic device 10 may include a processor 110, an external memory interface 120, an internal memory 121, an antenna 1, an antenna 2, a mobile communication module 130, a wireless communication module 140, an audio module 150, a sensor module 160, a camera module 170, a display 180, and the like.

It may be understood that the structure shown in this embodiment of this application does not constitute a specific limitation on the electronic device 10. In some other embodiments of this application, the electronic device 10 may include more or fewer components than those shown in the figure, or a combination of some components, or splits from some components, or a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 may be a cache. The memory may store instructions or data just used or frequently used by the processor 110. If the processor 110 needs to use the instructions or the data, the processor 110 may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to a module like an audio module, a wireless communication module, a display, and a camera through at least one of the foregoing interfaces.

It may be understood that an interface connection relationship between the modules illustrated in embodiments of this application is merely an example for description, and does not constitute a limitation on the structure of the electronic device 10. In some other embodiments of this application, the electronic device 10 may alternatively use an interface connection manner different from that in the foregoing embodiment, or a combination of a plurality of interface connection manners.

A wireless communication function of the electronic device 10 may be implemented through the antenna 1, the antenna 2, the mobile communication module 130, the wireless communication module 140, the modem processor, the baseband processor, and the like.

The mobile communication module 130 may provide a wireless communication solution that includes 2G/3G/4G/5G or the like and that is applied to the electronic device 10. The mobile communication module 130 may include at least one filter, a switch, a power amplifier, a low noise amplifier (low noise amplifier, LNA), and the like. In some embodiments, at least some function modules of the mobile communication module 130 may be disposed in the processor 110. In some embodiments, at least some function modules in the mobile communication module 130 may be disposed in a same device as at least some modules of the processor 110.

The wireless communication module 140 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), ultra-wideband (ultra-wideband, UWB), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 10. The wireless communication module 140 may be one or more components integrating at least one communication processing module.

In some embodiments, the electronic device 10 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 10 may implement a display function through the GPU, the display 180, the application processor, and the like. The GPU is a microprocessor for image processing, and is connected to the display 180 and the application processor. The GPU is configured to perform mathematical and geometric computation, and render an image. The processor 110 may include one or more GPUs, which execute program instructions to generate or change display information.

The camera module 170 includes a camera. The display 180 is configured to display an image, a video, and the like. The display 180 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the electronic device 10 may include one or more displays 180.

The external memory interface 120 may be configured to connect to an external memory card, for example, a micro SD card, to extend a storage capability of the electronic device 10. The external memory card communicates with the processor 110 through the external memory interface 120, to implement a data storage function.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data created during use of the electronic device 10. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121, and/or the instructions stored in the memory disposed in the processor, to perform various function methods of the electronic device 10 and data processing.

The audio module 150 is configured to convert digital audio information into an analog audio signal for output, and is also configured to convert an analog audio input into a digital audio signal. The audio module 150 may be further configured to encode and decode an audio signal. In some embodiments, the audio module 150 may be disposed in the processor 110, or some function modules of the audio module 150 are disposed in the processor 110.

A software system of the electronic device 10 may use a layered architecture, an event-driven architecture, a microkernel architecture, a micro service architecture, or a cloud architecture. In embodiments of this application, an Android system with a layered architecture is used as an example to describe a software structure of the electronic device 10.

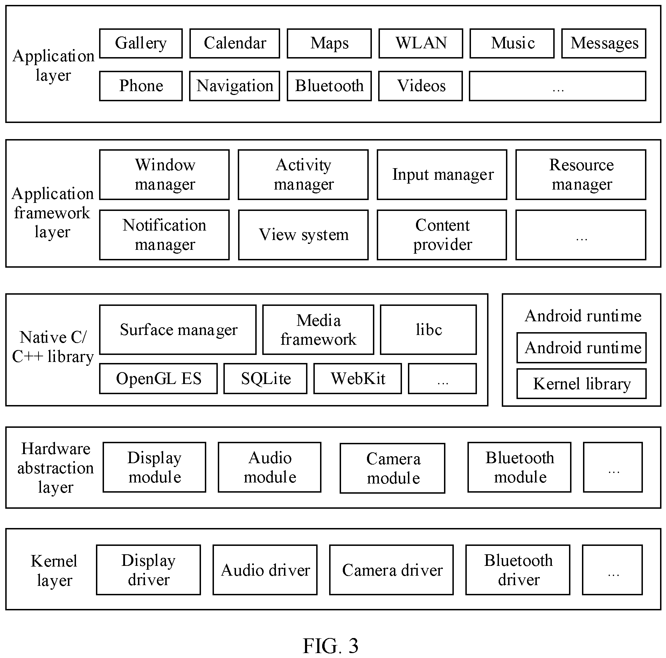

FIG. 3 is a block diagram of a software structure of the electronic device 10 according to an embodiment of this application.

In a layered architecture, software is divided into several layers, and each layer has a clear role and task. The layers communicate with each other through a software interface. In some embodiments, an Android system is divided into five layers: an application layer, an application framework layer, Android runtime (Android runtime, ART) and a native C/C++ library, a hardware abstraction layer (Hardware Abstraction Layer, HAL), and a kernel layer from top to bottom.

The application layer may include a series of application packages.

As shown in FIG. 3, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a resource manager, a notification manager, an activity manager, an input manager, and the like.

The window manager provides a window manager service (Window Manager Service, WMS), and the WMS can be used for window management, window animation management, surface management, and as a transit point for an input system.

The content provider is configured to store and obtain data, and enable the data to be accessed by an application. The data may include a video, an image, audio, calls that are made and received, a browsing history, a bookmark, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert sound is played, the electronic device vibrates, or the indicator light blinks.

The activity manager may provide an activity manager service (Activity Manager Service, AMS). The AMS may be used to start, switch, and schedule system components (for example, activities, services, content providers, and broadcast receivers), and manage and schedule application processes.

The input manager can provide an input manager service (Input Manager Service, IMS), which can be used for system input management, for example, a touchscreen input, a key input, and a sensor input. The IMS obtains an event from an input device node and allocates the event to an appropriate window through interaction with the WMS.

The Android runtime includes a kernel library and Android runtime. The Android runtime is responsible for converting source code into machine code. The Android runtime mainly includes an ahead of time (ahead of time, AOT) compilation technology and a just in time (just in time, JIT) compilation technology.

The kernel library is mainly used to provide functions of basic Java libraries, such as a basic data structure library, a mathematics library, an I/O library, a tool library, a database, and a network library. The kernel library provides the API for the user to develop the Android application.

A native C/C++ library may include a plurality of function modules, such as a surface manager (surface manager), a media framework (Media Framework), libc, OpenGL ES, SQLite, and WebKit.

The surface manager is configured to manage a display subsystem and provide fusion of 2D and 3D layers for a plurality of applications. The media framework supports playback and recording of audio and videos in a plurality of commonly used formats, static image files, and the like. The media library may support a plurality of audio and video encoding formats, for example, MPEG-4, H.264, MP3, AAC, AMR, JPG, and PNG. OpenGL ES provides drawing and manipulation of 2D and 3D graphics in the application. SQLite provides a lightweight relational database for the application of the electronic device 10.

The hardware abstraction layer runs in user space (user space), encapsulates a kernel layer driver, and provides an interface for an upper layer to invoke.

The kernel layer is a layer between hardware and software. The kernel layer includes at least a display driver, a camera driver, an audio driver, and a sensor driver.

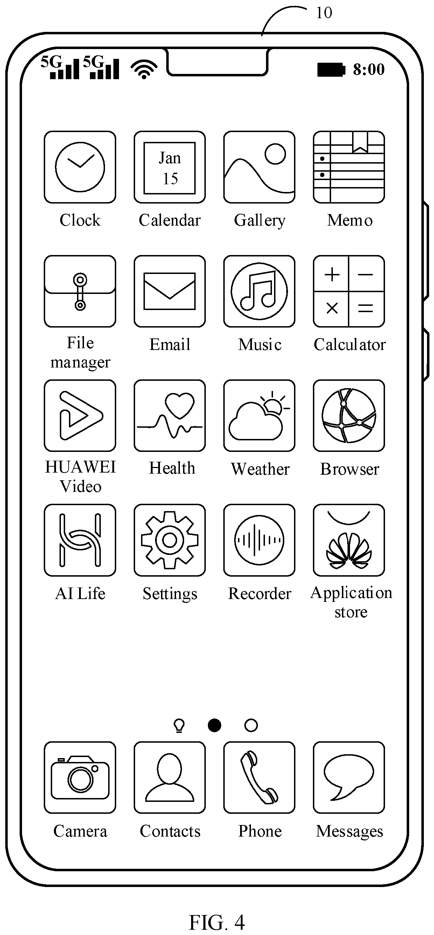

With reference to FIG. 4, the following describes an example of a diagram of an application scenario of a snapshot method according to an embodiment of this application.

For ease of description, as shown in FIG. 4, an example in which an electronic device 10 is a mobile phone is used for description. In this embodiment, one or more APPs may be installed on the electronic device 10. After a user taps an APP, the electronic device 10 may create a corresponding application process, and the application process may implement functions of the corresponding APP.

For an APP installed on the electronic device 10, the electronic device 10 establishes a root directory used to store a file of the APP. For example, a HUAWEI Video APP is installed on the electronic device 10, and the electronic device 10 establishes a root directory RT1 used to store a file of the HUAWEI Video APP. A snapshot of the file of the HUAWEI Video APP may be a snapshot of file data and file metadata in the root directory RT1. By performing a snapshot on the file of the HUAWEI Video APP, data restoration on the file of the HUAWEI Video APP can be quickly performed, or the file of the HUAWEI Video APP can be migrated to another electronic device subsequently (for example, a new mobile phone purchased by the user). For example, when a running fault of the HUAWEI Video APP occurs on the electronic device 10, or the file of the HUAWEI Video APP is damaged, the file of the APP may be quickly restored based on the previously created snapshot, so that the HUAWEI Video APP may be restored to a state at a time point at which the snapshot is performed previously. For another example, the user has two electronic devices 10 (where the two electronic devices are referred to as a first electronic device and a second electronic device below for ease of differentiation). A HUAWEI Video APP is installed on the first electronic device, and no HUAWEI Video APP is installed on the second electronic device. The first electronic device establishes a communication connection to the second electronic device. For example, the first electronic device may establish the communication connection to the second electronic device through Bluetooth or a wireless local area network. After the communication connection is successfully established, data that needs to be migrated may be selected on the first electronic device, for example, "HUAWEI Video APP" is selected, and then a "Start migration" icon is tapped, so that the file of the HUAWEI Video APP can be migrated to the second electronic device.

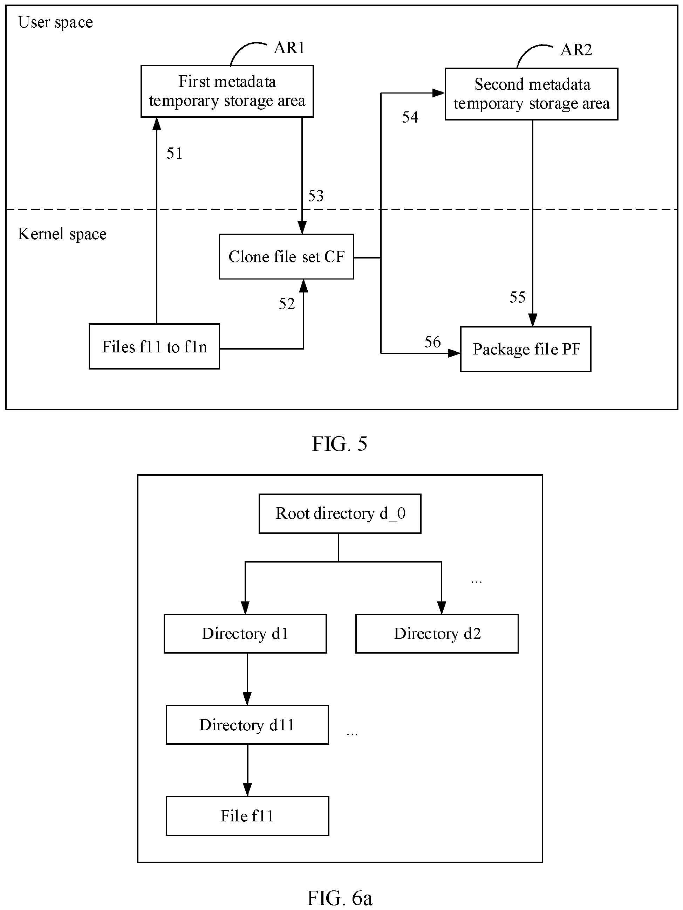

FIG. 5 is a diagram of an architecture in which an electronic device implements a data snapshot according to this application.

In this embodiment, an example in which an operating system installed on the electronic device 10 is a system developed based on a Linux kernel is used for description. A plurality of APPs may be installed on the electronic device 10, and the APPs installed on the electronic device 10 may be APPs installed when the electronic device 10 is delivered from a factory, or may be third-party APPs downloaded from a network or obtained by a user from another electronic device in a process of using the electronic device 10. The following uses an example in which a first APP A1 is installed on the electronic device 10 and a snapshot is performed on a file of the first APP A1. The performing a snapshot on the file of the first APP A1 includes performing a snapshot on metadata of the file of the first APP A1 and performing a snapshot on data of the file of the first APP A1. The first APP A1 may be an instant messaging application, a video application, an audio application, an image shooting application, a cloud desktop application, or the like. A type of the first APP A1 is not limited in this application.

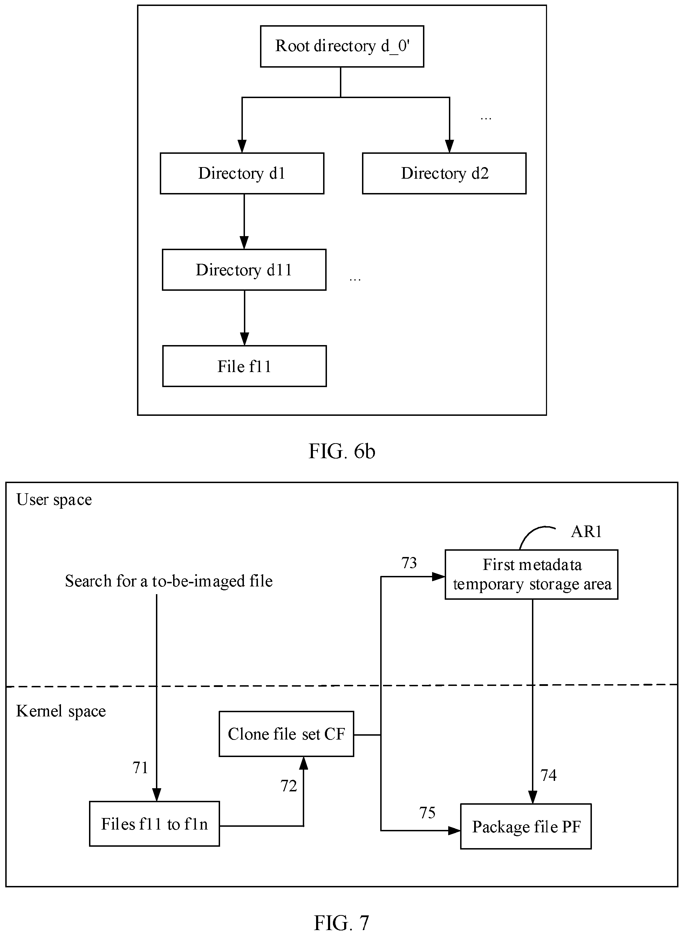

The electronic device 10 establishes a root directory d_0 that is used to store the file of the first APP A1. That the electronic device 10 performs a snapshot on the file of the first APP A1 may be that the electronic device 10 performs a snapshot on each file in the root directory d_0. When receiving a snapshot request for the first APP A1, the electronic device 10 may create an image root directory of the root directory d_0. The image root directory of the root directory d_0 is referred to as a root directory d_0' below, and the root directory d_0' is used to store an image file of the first APP A1. It is assumed that a directory structure of the root directory d_0 is shown in FIG. 6a, and a directory structure of the created root directory d_0' is shown in FIG. 6b. For the root directory d_0 and the root directory d_0', if a file f11 exists in the root directory d_0, and a storage path of the file f11 is "d_0/d1/d11/f11", a file f11 also exists in the root directory d_0'. The file f11 in the root directory d_0' is an image file of the file f11 in the root directory d_0. A storage path of the file f11 in the root directory d_0' is "d_0'/d1/d11/f11". A subdirectory d1 in the root directory d_0' is an image directory of a subdirectory d1 in the root directory d_0, and a subdirectory d11 in the root directory d_0' is an image directory of a subdirectory d11 in the root directory d_0.

In some embodiments, an image root directory is created for a root directory. The image root directory is used to store an image file. The root directory and the image root directory may be the same (that is, directories and files in the root directory and directories and files in the image root directory are the same), or the image root directory is a subset of the root directory (that is, the image root directory has some directories and files of the root directory). Creating an image file for a file may be: creating a blank file, and storing metadata of the file in the blank file, where the metadata of the file may include a file name, a file modification time, and the like; and then invoking a preset clone interface to copy data of the file to the blank file that stores the metadata of the file in a copy-on-write manner, to form the image file. The image file in this application may also be referred to as a clone file.

In some embodiments, the electronic device 10 may run a snapshot program. The snapshot program may respond to a snapshot request for the first APP A1 and perform a snapshot on data and metadata of each file in the root directory d_0, to write the data and metadata of each file in the root directory d_0 into a package file PF. For example, the first APP A1 includes n files such as f11, f12, ..., and f1n (n is a positive integer greater than 1), and the snapshot program adds data and metadata of the files f11 to f1n of the first APP A1 to the package file PF. The following implementation processes may be included.

51: The snapshot program reads the metadata of the files f11 to f1n from a file system, and stores the metadata of the files f11 to f1n from kernel space to a first metadata temporary storage area AR1 in user space.

In some embodiments, the metadata of the file f11 may be data used to describe the file f11, and the metadata of the file f1n may be data used to describe the file f1n. For example, the metadata of the file f11 may include a file name of the file f11, a latest modification time of the file, an extended attribute of the file, and the like. The first metadata temporary storage area AR1 in the user space may be a memory physical page used as a buffer (Buffer) in the user space. That the snapshot program stores the metadata of the files f11 to f1n from the kernel space to the first metadata temporary storage area AR1 in the user space may specifically include: a₁: The snapshot program copies the metadata of the files f11 to f1n from a disk to a page cache (Page Cache) in the kernel space, for example, the snapshot program sequentially copies the metadata of the files f11 to f1n from the disk to the page cache in the kernel space, where the page cache is a memory physical page; or the snapshot program copies the metadata of the files f11 to f1n from the disk to the page cache in the kernel space in a parallel manner; and a₂: the snapshot program copies the metadata of the files f11 to f1n from the page cache to the first metadata temporary storage area AR1 in the user space, for example, the snapshot program sequentially copies the metadata of the files f11 to f1n from the page cache to the first metadata temporary storage area AR1 in the user space; or the snapshot program copies the metadata of the files f11 to f1n from the page cache to the first metadata temporary storage area AR1 in the user space in a parallel manner.

52: The snapshot program performs copy-on-write on the data of the files f11 to f1n in the kernel space, to store the data of the files f11 to f1n in a clone file set CF.

In some embodiments, copy-on-write is performed on the data of the files f11 to f1n in the kernel space, so that the data of the files f11 to f1n can be stored in the clone file set CF. After the metadata of the files f11 to f1n stored in the first metadata temporary storage area AR1 is written into the clone file set CF, that is, the clone file set CF has the same data and metadata of the files f11 to f1n, the clone file set CF includes image files f11' to f1n' corresponding to the files f11 to f1n. The image file f11' has the same data and metadata as the file f11, and the image file f1n' has the same data and metadata as the file f1n. The image file f11' shares the data of the file f11, and the image file f1n' shares the data of the file f1n. That the image file f11' shares the data of the file f11 may mean that an index structure of the image file f11' and an index structure of the file f11 point to a same physical block, and the image file f11' and the file f11 share data stored in the physical block.

In some embodiments, the snapshot program may perform copy-on-write on a file each time, to store data of the file in the clone file set CF, until the data of all the files f11 to f1n is stored in the clone file set CF. In this embodiment of this application, the data of the files f11 to f1n is stored in the clone file set CF in a copy-on-write manner, and a read/write operation on the data of the files f11 to f1n on the disk is not involved. Therefore, system overheads are low. In other words, in this process, the data of the file does not need to be read from a storage device or the data of the file does not need to be written into a storage device. A CPU does not need to perform a copy operation on the data of the file. Therefore, system performance is less affected, time consumption is short, and power consumption of the CPU and the storage device is low during the copy-on-write.

53: The snapshot program writes the metadata of the files f11 to f1n stored in the first metadata temporary storage area AR1 into the clone file set CF.

In some embodiments, the metadata of the files f11 to f1n stored in the first metadata temporary storage area AR1 is written into the clone file set CF, so that the clone file set CF has not only the same data as the files f11 to f1n, but also the same metadata as the files f11 to f1n. Further, the clone file set CF may be used as a file copy of the first APP A1.

In some embodiments, after the clone file set CF is obtained, the package file PF corresponding to the first APP A1 is generated based on the clone file set CF. In this way, the user can normally use the first APP A1 after the clone file set CF is generated, and a problem in an existing package file generation solution is not caused, where the problem is that, before the package file is generated, if the user uses the first APP A1, the package file includes files in both a new state and an old state. In other words, unlike the existing package file generation solution in which the user is prohibited from using the first APP A1 before the package file PF is generated, this solution improves user experience.

In some embodiments, after generating the clone file set CF, the electronic device 10 may output prompt information, to prompt the user that the first APP A1 can be normally used.

In some embodiments, the snapshot program may copy the metadata of the files f11 to f1n from the first metadata temporary storage area AR1 in the user space to the page cache in the kernel space, to write the metadata of the files f11 to f1n stored in the first metadata temporary storage area AR1 into the clone file set CF.

54: The snapshot program reads the metadata of the image files f11' to f1n' from the clone file set CF, preprocesses the metadata of the image files f11' to f1n', and stores the preprocessed metadata into a second metadata temporary storage area AR2 in the user space.

In some embodiments, physical structures of the metadata and data of the files f11 to f1n, or physical structures of the metadata and data of the image files f11' to f1n' are set by the file system, and sorting is generally not performed based on an association relationship between the metadata and data. The preprocessing the metadata of the image files f11' to f1n' may refer to reorganizing the physical structure of the metadata of the image files f11' to f1n' based on a preset packaging standard format, and writing the processed metadata from the kernel space into the second metadata temporary storage area AR2 in the user space. In this way, subsequently, the metadata and data in the package file PF may have the following physical structure: [file 1 metadata] [file 1 data] [file 2 metadata] [file 2 data]... [file N metadata][file N data]. In other words, the metadata and data are sorted based on the association relationship between the metadata and data. For example, the metadata of the image files f11' to f1n' may be processed based on a POSIX format, and the processed metadata is written into the second metadata temporary storage area AR2.

In some embodiments, the first metadata temporary storage area AR1 and the second metadata temporary storage area AR2 may be a same metadata temporary storage area, or may be different metadata temporary storage areas. This is not limited in this application.

55: The snapshot program writes the metadata of the image files f11' to f1n' stored in the second metadata temporary storage area AR2 into the package file PF.

In some embodiments, read/write code logic of the package file PF runs in the kernel space. The snapshot program may copy the metadata of the image files f11' to f1n' from the second metadata temporary storage area AR2 in the user space to the page cache of the kernel space, to write the metadata of the image files f11' to f1n' stored in the second metadata temporary storage area AR2 into the package file PF.

56: The snapshot program performs copy-on-write on the data of the image files f11' to f1n' in the clone file set CF, to store the data of the image files f11' to f1n' in the package file PF.

In some embodiments, copy-on-write is performed on the data of the image files f11' to f1n' in the clone file set CF in the kernel space, so that the data of the image files f11' to f1n' is stored in the package file PF. In other words, both the package file PF and the clone file set CF share the data of the files f11 to f1n. When copy-on-write is performed on the data of the image files f11' to f1n' to store the data in the package file PF, a read/write operation on the file data in the disk is not involved. Therefore, system overheads are low and a speed is fast. For example, the snapshot program may perform copy-on-write on data of one image file each time, to generate a COW copy corresponding to data of each image file, until COW copies of data of all image files f11' to f1n' are stored in the package file PF.

The metadata of the image files f11' to f1n' is written into the package file PF, and the data of the image files f11' to f1n' is stored in the package file PF. In this way, the metadata and data of the files in the root directory d_0' are written into the package file PF, so that the package file PF has the same file metadata and file data as the root directory d_0, and the package file PF may be used as a snapshot file of the first APP A1.

In some embodiments, after the package file PF is generated, the package file PF may be further compressed, to save storage space occupied by the package file PF, and improve migration efficiency of the package file PF.

In some embodiments, the snapshot program may alternatively write, in the kernel space, the metadata of the files f11 to f1n into the package file PF. For example, a metadata temporary storage area is set in the kernel space, so that the snapshot program may read the metadata of the files f11 to f1n from the file system and temporarily store the metadata to the metadata temporary storage area in the kernel space, and write the metadata of the files f11 to f1n stored in the metadata temporary storage area in the kernel space into the clone file set CF. The snapshot program may further read the metadata of the image files f11' to f1n' from the clone file set CF, temporarily store the metadata into the metadata temporary storage area in the kernel space, and write the metadata of the image files f11' to f1n' stored in the metadata temporary storage area in the kernel space into the package file PF.

FIG. 7 is a diagram of an architecture in which an electronic device implements a data snapshot according to this application.

In this embodiment, an example in which an operating system installed on the electronic device 10 is a system developed based on a Linux kernel is used for description. A plurality of APPs may be installed on the electronic device 10, and the APPs installed on the electronic device 10 may be APPs installed when the electronic device 10 is delivered from a factory, or may be third-party APPs downloaded from a network or obtained by a user from another electronic device in a process of using the electronic device 10. The following uses an example in which a first APP A1 is installed on the electronic device 10 and a snapshot is performed on a file of the first APP A1. The performing a snapshot on the file of the first APP A1 includes performing a snapshot on metadata of the file of the first APP A1 and performing a snapshot on data of the file of the first APP A1. The first APP A1 may be an instant messaging application, a video application, an audio application, an image shooting application, a cloud desktop application, or the like. A type of the first APP A1 is not limited in this application.

In some embodiments, the electronic device 10 may run a snapshot program. The snapshot program may respond to a snapshot request for the first APP A1 and perform a snapshot on data and metadata of each file of the first APP A1, to write the data and metadata of each file of the first APP A1 into a package file PF. For example, the first APP A1 includes n files such as f11, f12, ..., and f1n (n is a positive integer greater than 1), and the snapshot program adds data and metadata of the files f11 to f1n of the first APP A1 to the package file PF. The following implementation processes may be included.

71: The snapshot program creates an image root directory of the first APP A1, and searches user space for a to-be-imaged file.

It is assumed that the electronic device 10 establishes a root directory d_1 that is used to store the files f11 to f1n. In this case, that the electronic device 10 performs a snapshot on the file of the first APP A1 may be that the electronic device 10 performs a snapshot on each file in the root directory d_1. When receiving the snapshot request for the first APP A1, the electronic device 10 may create the image root directory of the root directory d_1. The image root directory of the root directory d_1 is referred to as a root directory d_1' below, and the root directory d_1' is used to store an image file of the first APP A1. The snapshot program may respond to the snapshot request for the first APP A1, and perform a snapshot on the data and metadata of each file of the first APP A1, for example, search the user space for the file of the first APP A1, to perform a snapshot on each file of the first APP A1. The to-be-imaged file may be a file for which no image file is already created in the first APP A1.

72: The snapshot program invokes a kernel customized interface to copy metadata of a found file and perform copy-on-write on data of the file, to generate or update an image file under the image root directory, and obtain a clone file set CF.

Generation of the image root directory and the image file in the image root directory may be controlled in the user space, and the image file or the directory in the image root directory may be generated in kernel space. The to-be-imaged file or directory is searched for, and the metadata of the file is copied and copy-on-write is performed on the data of the file by invoking the kernel customized interface, to generate or update the image file and directory in the image root directory. The kernel customized interface may be an interface designed to copy the metadata of the file and perform copy-on-write on the data of the file in the kernel space. Compared with FIG. 5 in which the first metadata temporary storage area AR1 is set to temporarily store the metadata of the files f11 to f1n and twice metadata copy between the kernel space and the user space is involved, this solution in which the metadata of the file is copied in the kernel space takes a shorter time.

The user space is searched for the file of the first APP A1, and the metadata of each found file is copied and copy-on-write is performed on the data of the file by invoking the kernel customized interface, to obtain the clone file set CF. A speed is high, and system resource overheads are low. The clone file set CF includes image files f11' to f1n' corresponding to the files f11 to f1n. The image file f11' has the same data and metadata as the file f11, and the image file f1n' has the same data and metadata as the file f1n. The image file f11' shares the data of the file f11, and the image file f1n' shares the data of the file f1n. That the image file f11' shares the data of the file f11 may mean that an index structure of the image file f11' and an index structure of the file f11 point to a same physical block, and the image file f11' and the file f11 share data stored in the physical block.

73: The snapshot program reads the metadata of the image files f11' to f1n' from the clone file set CF, preprocesses the metadata of the image files f11' to f1n', and stores the preprocessed metadata in a first metadata temporary storage area AR1 in the user space.

74: The snapshot program writes the metadata of the image files f11' to f1n' stored in the first metadata temporary storage area AR1 into the package file PF.

75: The snapshot program performs copy-on-write on the data of the image files f11' to f1n' in the clone file set CF, to store the data of the image files f11' to f1n' in the package file PF.

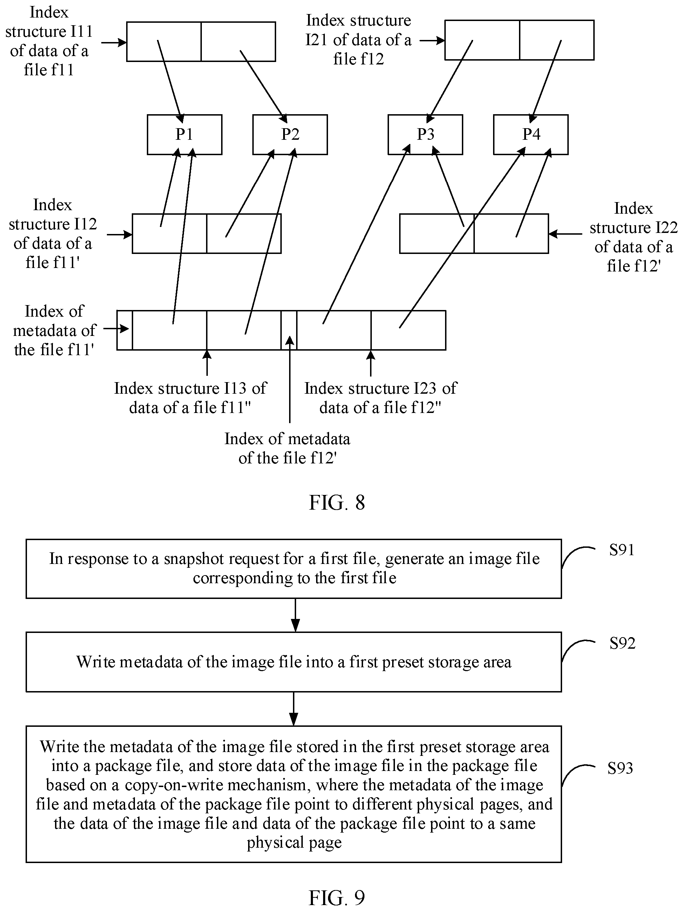

As shown in FIG. 8, it is assumed that the first APP A1 includes a file f11 and a file f12, the clone file set CF includes an image file f11' corresponding to the file f11 and an image file f12' corresponding to the file f12, and the package file PF includes an image file f11" corresponding to the image file f11' and an image file f12" corresponding to the image file f12'.

An index structure I11 of the data of the file f11, an index structure I12 of data of the image file f11', and an index structure I13 of data of the image file f11" point to same physical blocks P1 and P2, and the file f11, the image file f11', and the image file f11" share file data stored in the physical blocks P1 and P2. An index structure I21 of the data of the file f12, an index structure I22 of data of the image file f12', and an index structure I23 of data of the image file f12" point to same physical blocks P3 and P4, and the file f12, the image file f12', and the image file f12" share file data stored in the physical blocks P3 and P4.

A process of obtaining the image file f11' from the file f11 may include: creating a first blank file, storing the metadata of the file f11 in the first blank file, performing copy-on-write on the data of the file f11, and storing the data of the file f11 in the first blank file in which the metadata of the file f11 is stored, to form the image file f11'. An operation related to storing metadata of the file f11 in the first blank file may include: reading the metadata of the file f11 from the kernel space, storing the metadata to the metadata temporary storage area in the user space, and then copying the metadata of the file f11 stored in the metadata temporary storage area to a page cache in the kernel space, to store the metadata of the file f11 to the first blank file, where the metadata of the file f11 and metadata of the image file f11' point to different physical pages. An operation related to performing copy-on-write on data of the file f11, and storing the data of the file f11 in the first blank file in which the metadata of the file f11 is stored may include: performing copy-on-write on the data of the file f11, and storing the data of the file f11 in the first blank file in which the metadata of the file f11 is stored, to form the image file f11', where the data of the file f11 and the data of the image file f11' point to a same physical page. The storing, based on a copy-on-write mechanism, the data of the file f11 in the first blank file in which the metadata of the file f11 is stored does not involve performing a read/write operation on the data of the file f11 on a disk, and system overheads are low. In other words, in this process, the data of the file f11 does not need to be read from a storage device or the data of the file f11 does not need to be written into a storage device. Therefore, system performance is less affected, and consumed time is short.

A process of obtaining the image file f11" from the image file f11' may also include: creating a second blank file, storing the metadata of the image file f11' in the second blank file, where the metadata of the image file f11' and metadata of the image file f11" point to different physical pages, performing copy-on-write on the data of the image file f11', and storing the data of the image file f11' in the second blank file in which the metadata of the image file f11' is stored, to form the image file f11". The data of the image file f11' and the data of the image file f11" point to a same physical page. A process of obtaining the image file f12' from the file f12 may include: creating a third blank file, storing the metadata of the file f12 in the third blank file, where the metadata of the file f12 and metadata of the image file f12' point to different physical pages, performing copy-on-write on the data of the file f12, and storing the data of the file f12 in the third blank file in which the metadata of the file f12 is stored, to form the image file f12'. The data of the file f12 and the data of the image file f12' point to a same physical page. A process of obtaining the image file f12" from the image file f12' may also include: creating a fourth blank file, and storing the metadata of the image file f12' in the fourth blank file, where the metadata of the image file f12' and metadata of the image file f12" point to different physical pages, performing copy-on-write on the data of the image file f12', and storing the data of the image file f12' in the fourth blank file in which the metadata of the image file f12' is stored, to form the image file f12". The data of the image file f12' and the data of the image file f12" point to a same physical page.

As shown in FIG. 9, an embodiment of this application provides a snapshot method, applied to an electronic device 10. The snapshot method may include the following steps.

S91: In response to a snapshot request for a first file, generate an image file corresponding to the first file.

The first file may include first file data (data of the first file) and first file metadata (metadata of the first file), and the image file may include image file data (data of the image file) and image file metadata (metadata of the image file).

In some embodiments, a second preset storage area may be set in user space. A manner of writing the metadata of the first file with a small amount into the image file may be: reading the metadata of the first file from kernel space, storing the metadata in the second preset storage area in the user space, and then writing the metadata of the first file stored in the second preset storage area into the image file. A manner of writing the data of the first file with a large amount into the image file may be: performing copy-on-write on the data of the first file in the kernel space, to store the data of the first file in the image file. The metadata of the first file with a small amount is stored in the image file in a write manner, where the metadata of the image file and the metadata of the first file may point to different physical pages. The data of the first file with a large amount is stored in the image file based on a copy-on-write mechanism, where the data of the image file and the data of the first file may point to a same physical page. Because the data of the first file is stored in the image file in the copy-on-write manner, copy and write operations on the data of the first file are not involved. In this process, the data of the first file does not need to be read from a storage device or the data of the first file does not need to be written into a storage device. Therefore, a file snapshot generation time is short, and system performance is less affected.

For the first file and the image file of the first file, after the two files share a copy-on-write page, the two files share same file data. In this case, when a write operation is performed on a copy-on-write page of either of the two files, data is copied to a new page, and the original copy-on-write page is replaced.

In some embodiments, a first blank file may be created, the metadata of the first file is written into the first blank file, and copy-on-write is performed on the data of the first file, to store the data of the first file in the first blank file into which the metadata of the first file is written. The blank file in which the metadata of the first file and the metadata of the first file are stored may be used as the image file corresponding to the first file. The image file and the first file have same metadata and data. An index structure of the image file and an index structure of the first file point to a same physical block, and the image file and the first file share data stored in the physical block.

In some embodiments, a kernel interface may be further customized. The kernel interface is configured to implement functions of copying the metadata of the first file and performing copy-on-write on the data of the first file in the kernel space, and further, the kernel interface may be invoked to generate, in response to the snapshot request for the first file, the image file corresponding to the first file. By invoking the kernel interface, copying the metadata of the first file and performing copy-on-write on the data of the first file in the kernel space may be implemented at a time. Compared with twice metadata copy between the kernel space and the user space that is involved when a metadata temporary storage area (the second preset storage area) is set in the user space to stage the file metadata, this technical solution of copying the file metadata in the kernel space by invoking the kernel interface consumes a shorter time.

If the first file includes a plurality of sub-files, a to-be-imaged sub-file can be searched in the user space, and the kernel interface is invoked in the kernel space to copy metadata of the to-be-imaged sub-file and perform copy-on-write on data of the to-be-imaged sub-file, to obtain the image file corresponding to the first file. Compared with implementing functions of searching for the to-be-imaged sub-file and generating an image file of each sub-file in the kernel space, this technical solution reduces development difficulty and maintenance costs.

S92: Write the metadata of the image file into a first preset storage area.

In some embodiments, the first preset storage area may be located in the user space, and the metadata of the image file may be read from the kernel space and written into the first preset storage area located in the user space. If the first file includes a plurality of sub-files, and the image file corresponding to the first file includes a plurality of image sub-files, a physical structure of metadata of the plurality of image sub-files can be reorganized based on a preset packaging standard format, and the reorganized metadata of the plurality of image sub-files is written into the first preset storage area. A physical structure of metadata and data of the plurality of image sub-files is usually set by a file system. The metadata and data of the plurality of image sub-files are generally not sorted based on an association relationship between the metadata and data of the plurality of image sub-files. A physical structure of metadata of each image sub-file is reorganized based on the preset packaging standard format for the metadata of the plurality of image sub-files. For example, the preset packaging standard format is a POSIX format. The reorganized metadata is written from the kernel space into the first preset storage area located in the user space. In this way, subsequently, the metadata and data in the package file may be sorted based on the association relationship between the metadata and data. For example, the package file has the following physical structure: [file 1 metadata][file 1 data][file 2 metadata][file 2 data]...[file N metadata] [file N data].

S93: Write the metadata of the image file stored in the first preset storage area into a package file, and store the data of the image file in the package file based on a copy-on-write mechanism, where the metadata of the image file and metadata of the package file point to different physical pages, and the data of the image file and data of the package file point to a same physical page.

A manner of writing the metadata of the image file with a small amount into the package file may be: reading the metadata of the image file from the first preset storage area, and writing the metadata of the image file into the package file. A manner of writing the data of the image file with a large amount into the package file may be: performing copy-on-write on the data of the image file in the kernel space, and storing the data of the image file into the package file. The metadata of the image file with a small amount is written into the package file in a write manner, and the data of the image file with a large amount is stored in the package file based on the copy-on-write mechanism. Because the data of the image file is stored in the package file in the copy-on-write manner, copy and write operations on the data of the image file are not involved. In this process, the data of the image file does not need to be read from a storage device or the data of the image file does not need to be written into a storage device. Therefore, a file snapshot generation time is short, system performance is less affected, and development and maintenance costs are low.

In some embodiments, a second blank file may be created, the metadata of the image file stored in the first preset storage area is written into the second blank file, and copy-on-write is performed on the data of the image file, to store the data of the image file in the second blank file into which the metadata of the image file is written. The blank file in which the metadata of the image file and the metadata of the image file are stored is used as the package file corresponding to the first file. The image file and the package file have same metadata and data. An index structure of the image file and an index structure of the package file point to a same physical block, and the image file and the package file share data stored in the physical block.

In some embodiments, for example, the first file is all files of a first application. After an image file corresponding to the first application is obtained by performing a snapshot on the first application, a package file corresponding to the first application is generated based on the image file of the first application, so that a user can normally use the first application after the image file corresponding to the first application is generated. For example, prompt information may be output to prompt the user that the first application can be normally used. A problem existing in an existing package file generation solution is not caused, where the problem is that before the package file is generated, if the user uses the first application, the package file includes files in both new and old states. In other words, unlike the existing package file generation solution in which the user is prohibited from using the first application before the package file is generated, this technical solution can improve user experience.

In some embodiments, the image file obtained in step S91 may be stored in an image root directory. For example, the first file is all files of the first application. In a process of performing a snapshot on the first application, information about a root directory of the first application may be obtained, and the image root directory corresponding to the root directory of the first application is created. The image root directory is used to store the image file of the first application, so that the package file may be subsequently generated based on directories and files in the image root directory. The image root directory may be the same as the root directory of the first application. In other words, directories and files in the root directory of the first application is the same as directories and files in the image root directory of the first application. Alternatively, the image root directory may be a subset of the root directory of the first application. In other words, the image root directory of the first application has some directories and files in the root directory of the first application.

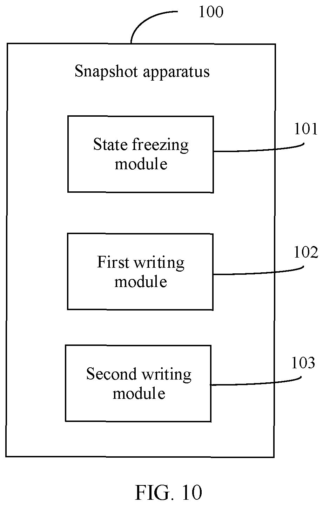

As shown in FIG. 10, an embodiment of this application provides a snapshot apparatus 100, including a state freezing module 101, a first writing module 102, and a second writing module 103. Modules in embodiments of this application may be a series of computer program instruction segments that can complete a specific function, or may be function modules formed by cooperating with hardware in a computer program instruction segment. Division into the modules is logical function division. During actual implementation, there may be another division manner. This is not limited in this application.

The state freezing module 101 is configured to: in response to a snapshot request for a first file, generate an image file corresponding to the first file.

A state of the first file is frozen by using the state freezing module 101, so that a corresponding package file is subsequently generated based on an image file of the first file. There is no need to prohibit reading and writing the first file before the package file is generated. For example, the first file is all files of a first application. After an image file corresponding to the first application is obtained, a package file corresponding to the first application is generated based on the image file of the first application, so that a user can normally use the first application after the image file corresponding to the first file is generated. A problem existing in an existing package file generation solution is not caused, where the problem is that before the package file is generated, if the user uses the first application, the package file includes files in both new and old states. In other words, unlike the existing package file generation solution in which the user is prohibited from using the first application before the package file is generated, this technical solution can improve user experience.

The first writing module 102 is configured to write metadata of the image file into a first preset storage area.

The second writing module 103 is configured to write the metadata of the image file stored in the first preset storage area into the package file, and store data of the image file in the package file based on a copy-on-write mechanism.

In some embodiments, a manner of writing file metadata with a small amount into the package file may be: reading the metadata of the image file from kernel space and storing the metadata of the image file in a first preset storage area in user space, where the first preset storage area is, for example, a metadata temporary storage area in the user space; and then writing the metadata of the image file stored in the first preset storage area into the package file. In this file metadata writing manner, the metadata of the image file and metadata of the package file point to different physical pages. A manner of writing file data with a large amount into the package file may be: performing copy-on-write on the data of the image file in the kernel space, and storing the data of the image file in the package file. In this file data writing manner, the data of the image file and the data of the package file point to a same physical page. Because the data of the image file is stored in the package file in the copy-on-write manner, copy and write operations on the data of the image file are not involved. In this process, the data of the image file does not need to be read from a storage device or the data of the image file does not need to be written into a storage device. Therefore, a file snapshot generation time is short, system performance is less affected, and development and maintenance costs are low.

In an electronic device 10 provided in an embodiment of this application, an internal memory 121 may be configured to store instructions, and a processor 110 may be configured to invoke the instructions in the internal memory 121, so that the electronic device 10 performs the foregoing related method steps to implement the snapshot method in the foregoing embodiments. The internal memory 121 may also store a state freezing module 101, a metadata writing module 102, and a data writing module 103, and the state freezing module 101, the metadata writing module 102, and the data writing module 103 are executed by the processor 110 to implement a function of the snapshot apparatus 100.

An embodiment of this application further provides a computer storage medium. The computer storage medium stores computer instructions. When the computer instructions are run on an electronic device 10, the electronic device 10 is enabled to perform the related method steps, to implement the snapshot method in the foregoing embodiments.

An embodiment of this application further provides a computer program product. When the computer program product runs on an electronic device, the electronic device is enabled to perform the related method steps, to implement the snapshot method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the snapshot method in the foregoing method embodiments.

The computer storage medium, the computer program product, or the chip provided in embodiments of this application may be all configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may clearly understand that for the purpose of convenient and brief descriptions, division into the foregoing function modules is merely used as an example for description. During actual application, the foregoing functions can be allocated to different function modules for implementation based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is an example. For example, division into the modules or the units is logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer or a chip) or a processor (processor) to perform all or some of the steps of the methods in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application.

## Claims

1. A snapshot method, comprising:
in response to a snapshot request for a first file, generating an image file corresponding to the first file;
writing metadata of the image file into a first preset storage area; and
writing the metadata of the image file stored in the first preset storage area into a package file, and storing data of the image file in the package file based on a copy-on-write mechanism, wherein the metadata of the image file and metadata of the package file point to different physical pages, and the data of the image file and data of the package file point to a same physical page.

2. The snapshot method according to claim 1, wherein the metadata of the image file and metadata of the first file point to different physical pages, and the data of the image file and data of the first file point to a same physical page.

3. The snapshot method according to claim 2, wherein the generating an image file corresponding to the first file comprises:
writing the metadata of the first file into the image file, and storing the data of the first file in the image file based on the copy-on-write mechanism.

4. The snapshot method according to claim 3, wherein the writing the metadata of the first file into the image file, and storing the data of the first file in the image file based on the copy-on-write mechanism comprises:
creating a first blank file, and writing the metadata of the first file into the first blank file; and
performing copy-on-write on the data of the first file, and storing the data of the first file in the first blank file into which the metadata of the first file is written, to obtain the image file corresponding to the first file.

5. The snapshot method according to claim 3, wherein the writing the metadata of the first file into the image file comprises:
writing the metadata of the first file into a second preset storage area; and
writing the metadata of the first file stored in the second preset storage area into the image file.

6. The snapshot method according to claim 5, wherein the second preset storage area is located in user space, and the storing the data of the first file in the image file based on the copy-on-write mechanism comprises:
performing copy-on-write on the data of the first file in kernel space, and storing the data of the first file in the image file.

7. The snapshot method according to any one of claims 1 to 6, wherein the first file comprises a plurality of sub-files, the image file corresponding to the first file comprises a plurality of image sub-files, and the writing metadata of the image file into a first preset storage area comprises:
reorganizing a physical structure of metadata of the plurality of image sub-files based on a preset packaging standard format; and
writing the reorganized metadata of the plurality of image sub-files into the first preset storage area.

8. The snapshot method according to claim 2, wherein the generating an image file corresponding to the first file comprises:
invoking a preset kernel interface to copy the metadata of the first file and perform copy-on-write on the data of the first file, to obtain the image file corresponding to the first file.

9. The snapshot method according to claim 8, wherein the invoking a preset kernel interface to copy the metadata of the first file and perform copy-on-write on the data of the first file comprises:
invoking the preset kernel interface to copy the metadata of the first file and perform copy-on-write on the data of the first file in kernel space.

10. The snapshot method according to claim 8, wherein the first file comprises a plurality of sub-files, and the invoking a preset kernel interface to copy the metadata of the first file and perform copy-on-write on the data of the first file comprises:
searching user space for a to-be-imaged sub-file; and
invoking the preset kernel interface to copy metadata of the to-be-imaged sub-file and perform copy-on-write on data of the to-be-imaged sub-file in kernel space.

11. The snapshot method according to claim 1, wherein the first preset storage area is located in user space, and the storing data of the image file in the package file based on a copy-on-write mechanism comprises:
performing copy-on-write on the data of the image file in kernel space, and storing the data of the image file in the package file.

12. The snapshot method according to claim 1, wherein the writing the metadata of the image file stored in the first preset storage area into a package file, and storing data of the image file in the package file based on a copy-on-write mechanism comprises:
creating a second blank file, and writing the metadata of the image file stored in the first preset storage area into the second blank file; and
performing copy-on-write on the data of the image file, and storing the data of the image file in the second blank file into which the metadata of the image file is written, to obtain the package file.

13. The snapshot method according to any one of claims 1 to 12, wherein the first file is all files of a first application, and after the generating an image file corresponding to the first file, the method further comprises:
outputting prompt information associated with the first application, wherein the prompt information is used to prompt that an operation can be performed on the first application.

14. The snapshot method according to any one of claims 1 to 12, wherein the first file is all files of a first application, and before the generating an image file corresponding to the first file, the method further comprises:
creating an image root directory corresponding to a root directory of the first application, wherein the image root directory is used to store the image file.

15. The snapshot method according to claim 14, wherein the image root directory is the same as the root directory of the first application, or the image root directory is a subset of the root directory of the first application.

16. A computer-readable storage medium, comprising computer instructions, wherein when the computer instructions are run on a processor, an electronic device is enabled to perform the snapshot method according to any one of claims 1 to 15.

17. An electronic device, wherein the electronic device comprises a processor and a memory, the memory is configured to store instructions, and the processor is configured to invoke the instructions in the memory, so that the electronic device is enabled to perform the snapshot method according to any one of claims 1 to 15.

18. A computer program product, comprising computer instructions, wherein when the computer instructions are run on a processor, an electronic device is enabled to perform the snapshot method according to any one of claims 1 to 15.
